# EUROPEAN PATENT SPECIFICATION

(11) **EP 1 922 423 B1**
(45) Date of publication and mention of the grant of the patent: **13.07.2011**
(21) Application number: 06774795.6
(22) Date of filing: 08.08.2006
(51) Int. Cl.: C22B 1/16, C22B 3/04, C22B 23/00

(54) **HYDROMETALLURGICAL METHOD FOR THE EXTRACTION OF NICKEL AND COBALT FROM LATERITE ORES**
HYDROMETALLURGISCHES VERFAHREN ZUR EXTRAKTION VON NICKEL UND COBALT AUS LATERITERZEN
PROCÉDÉ HYDROMÉTALLURGIQUE POUR L EXTRACTION DE NICKEL ET DE COBALT DE MINERAIS DE LATÉRITE

(30) Priority: 09.08.2005 AU 2005904274
(43) Date of publication of application: 21.05.2008
(73) Proprietor: Murrin Murrin Operations Pty Ltd, Perth, WA 6000 (AU)
(72) Inventor: RODRIGUEZ, Michael, Kingsley, Western Australia 6026 (AU); WEDDERBURN, Bruce, James, Glen Waverley, Victoria 3150 (AU)
(74) Representative: D'Arcy, Julia
(86) International application number: PCT/AU2006/001128
(87) International publication number: WO 2007/016737

(56) References cited:
- EP-A- 0 547 744
- WO-A-03/010345
- WO-A-2004/031422
- WO-A-2005/005671
- WO-A1-03/093517
- WO-A1-2004/031422
- WO-A1-2005/005671
- WO-A2-01/32943
- WO-A2-01/75184
- WO-A2-93/10271
- US-A- 4 541 994
- US-A- 5 421 858
- US-A1- 2002 006 370
- US-B1- 6 391 089
- US-B2- 6 379 636

## Description

### Field of the Invention

The present invention relates to a hydrometallurgical method for the extraction of nickel and cobalt from laterite ores. More particularly, the hydrometallurgical method of the present invention is intended to allow the processing of a substantially complete laterite ore stream.

### Background Art

Nickel is typically extracted from its oxide or laterised ores by either pyrometallurgical (smelting for nickel matte production and smelting for ferronickel production) and hydrometallurgical (Caron method of ammoniacal leaching and Freeport Sulphur method of pressure leaching with sulphuric acid) methods. In Australia, nickel is extracted from its oxide or laterised ores using both the hydrometallurgical methods of the Caron process and pressure leaching processes.

The pyrometallurgical methods of the prior art are typically energy and capital cost intensive and consequently have been considered unsuitable for the recovery of nickel from low-grade ores. Hydrometallurgical methods of the prior art are typically operating cost sensitive and capital cost sensitive. In particular, this technology is unsuitable for the high saprolite fractions, these fractions resulting in high acid consumptions for the pressure leaching process.

For the above reasons, the prior pyrometallurgical and hydrometallurgical methods have been considered unsuitable for processing of the coarse laterite fraction produced during the beneficiation process typically employed to reduce the size of run of mine ore and to reduce the magnesium content of the ore prior to hydrometallurgical processing.

The coarse laterite fraction is most commonly a predominantly saprolite fraction high in magnesium with a relatively low nickel content of less than 1.5%. Such a fraction is often rejected in the screening process prior to passing the finer limonite ore fraction to pressure leaching. The coarse ore fraction has to date typically been sent to waste and stock piled. However, if a hydrometallurgical method for the extraction of nickel and cobalt from such ores were available it may lead to a reduction in stock piles and an increase in total nickel and cobalt recovery from run of mine laterite ores.

Heap leaching is understood to be a low cost hydrometallurgical treatment option for certain ore types. However, an acknowledged problem associated with the heap leaching of laterite ores is the substantial clay component present in such ores. The clay components of the ore significantly impact on the permeability of the heap, which is critical for the commercial operation of a heap leach. For example, it is advantageous if all ore within the heap is available to the leach solution. Accordingly, the leach solution will preferably percolate throughout the heap and gain access to the majority of the ore therein. However, the clay components of an ore can impact on the permeability of the heap by swelling and closing off voids which leads to channelling of leach solution. The clay components of the ore can also dry out, either by natural drying or dehydration caused by elevated temperature or excessive sulphuric acid addition, and form fine particulates which can also adversely affect the permeability of the heap leach.

International Patent Application PCT/AU2004/000943 (WO 2005/005671) describes a process for the recovery of nickel and cobalt from laterite ores in which the laterite is beneficiated to provide an upgraded fine fraction that is passed to a pressure acid leach and a coarse, siliceous low grade rejects fraction that is specifically washed to remove any clay component and thereby avoid an agglomeration step prior to heap leaching. The heap is then leached using an acid supplemented waste solution, the pregnant liquors from both leaches being combined and passed to metals recovery. This process requires both the steps of clay component removal prior to heap stacking and production of an acidified solution for the heap leach process. The method of the present invention does not require either step whilst providing a method for the effective co-processing of fine and coarse laterite ore fractions.

The hydrometallurgical method of the present invention has as one object thereof to substantially overcome the problems associated with the prior art or to at least provide a useful alternative thereto.

The preceding discussion of the background art is intended to facilitate an understanding of the present invention only. It should be appreciated that the discussion is not an acknowledgement or admission that any of the material referred to was part of the common general knowledge in Australia or any other country or region as at the priority date of the application.

Throughout the specification, unless the context requires otherwise, the word "comprise" or variations such as "comprises" or "comprising", will be understood to imply the inclusion of a stated integer or group of integers but not the exclusion of any other integer or group of integers.

Reference to composition as a percentage is reference to % by weight unless stated otherwise.

### Disclosure of the Invention

In accordance with the present invention there is provided a hydrometallurgical method for the extraction of nickel and cobalt from laterite ores, the method characterised by the method steps of:
(i) Beneficiating a run of mine laterite ore containing nickel and cobalt into a substantially fine ore fraction and a substantially coarse ore fraction;
(ii) Passing the fine ore fraction to a pressure acid leaching step in which a sulphuric acid lixiviant is used to extract nickel and cobalt values forming a leach slurry comprising liquor and residue solids components;
(iii) Passing at least a portion of the coarse ore fraction to an agglomeration step in which the coarse ore fraction is agglomerated;
(iv) Forming at least one heap from the agglomerated ore of step (iii);
(v) Passing the leach slurry from the pressure acid leach step (ii) to a solid/liquid separation step, from which the residue solids are passed to waste, a proportion of the liquor is passed to further processing for metals recovery and a further portion of the liquor is passed directly or indirectly to the or each heap formed in step (iv);
(vi) Leaching the coarse ore fraction in the heaps with liquor separated in step (v) wherein the leaching agent is the free acid remaining therein from the pressure acid leaching step (ii); and
(vii) Passing pregnant leach solution from the or each heap directly or indirectly to metals recovery.

Preferably, at least two operationally distinct heaps are formed from the coarse ore fraction. The portion of separated liquor from step (v) may be passed to a first heap from which an intermediate leach solution is recovered and in turn passed to a second heap from which the recovered leach solution is passed to metals recovery.

The effect of passing a portion of the separated liquor from step (v) directly or indirectly to the or each heap is both the recovery of nickel and cobalt values from the coarse ore and the neutralisation of free acid in the separated liquor.

Preferably, the solid/liquid separation step (v) is provided in the form of a counter-current decantation process step, at least a portion of the overflow from such step being passed to the or each heap directly or indirectly.

The counter-current decantation overflow preferably contains dilute sulphuric acid in the range of about 10 to 50 g/l. The leach solution recovered from the at least one heap preferably contains sulphuric acid in the range of about 0 to 20 g/l.

The agglomeration of the coarse ore prior to heap stacking preferably comprises the generally homogenous wetting of that ore at a percentage of about 20% to 30% inclusive of any moisture already present. Still preferably, the agglomeration step occurs with sulphuric acid solution. Still further preferably, the agglomerated ore is subjected to a curing step over a period of 1 to 20 days prior to irrigation of the or each heap.

Preferably, the fine ore fraction is the undersize fraction of a 2 mm aperture screen. Still preferably, the fine ore fraction is the undersize fraction of a 1 mm aperture screen. The coarse ore fraction is preferably the oversize reject from this screen.

In accordance with the present invention there is further provided a hydrometallurgical process for the extraction of nickel and cobalt from laterite ores, the method characterised by the method steps of:
(i) Passing an amount of fine laterite ore to a pressure acid leaching step in which a leach slurry is formed, the slurry comprising liquor and residue solids components;
(ii) Passing an amount of coarse laterite ore to an agglomeration step;
(iii) Forming at least one heap of the agglomerated coarse ore of step (ii);
(iv) Passing the leach slurry from step (i) to a solid/liquid separation step, a proportion of the liquor from which is passed to further processing for metals recovery and a further portion of which is passed directly or indirectly to the or each heap of step (iii);
(v) Leaching the coarse ore in the or each heap with liquor separated in step (iv) wherein the leaching agent is the free acid remaining therein from the pressure acid leaching step (i); and
(vi) Passing pregnant leach solution from the or each heap directly or indirectly to metals recovery.

### Brief Description of the Drawings

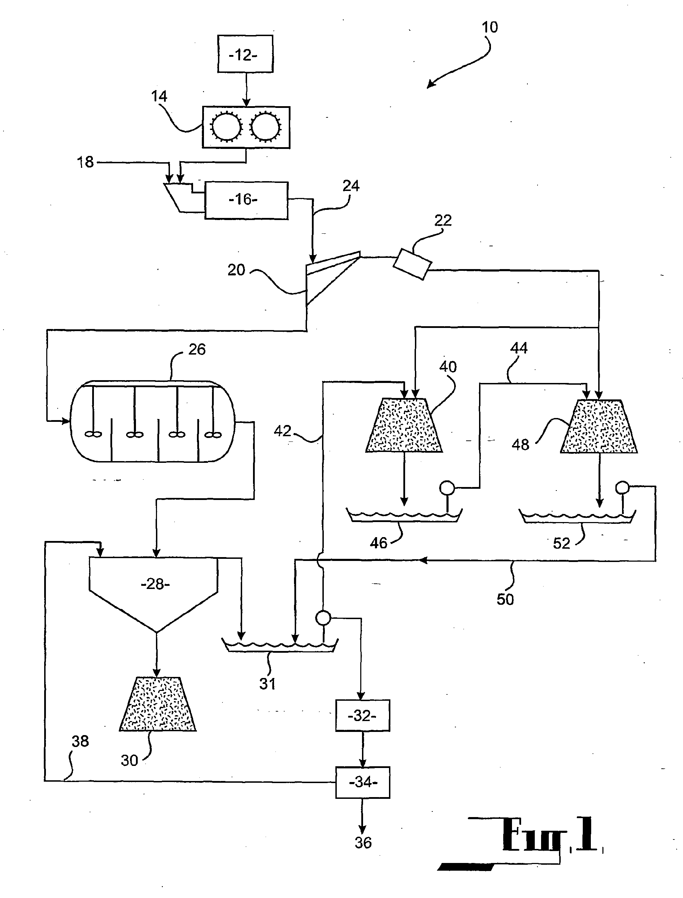

The present invention will now be described, by way of example only, with reference to one embodiment thereof and the accompanying drawing, in which:-
Figure 1 is a diagrammatic representation of a flow sheet depicting a hydrometallurgical method for the extraction of nickel and cobalt from laterite ores in accordance with the present invention.

### Best Mode(s) for Carrying Out the Invention

In Figure 1 there is shown a diagrammatic representation of a hydrometallurgical method 10 for the extraction of nickel and cobalt from laterite ores. The method 10 incorporates the method step of heap leaching the coarse fraction produced from beneficiation (mill scats), described hereinafter, that contain oxides of both nickel and cobalt, and minor sulphide minerals (about 0.5%) of nickel and cobalt. It is understood that the presence of the minor sulphides improves the ultimate extraction from the oxides present as the sulphides dissociate with ferric iron and a portion thereof acts as a reductant on the oxides.

In one form, the method of the present invention includes the steps of pretreatment of the mill scats, heap construction, heap operation, pregnant leach solution pre-reduction and neutralisation, followed by mixed sulphide precipitation of the nickel and cobalt in solution.

Referring to Figure 1, a run of mine laterite ore 12 is first fed to a beneficiation plant comprising a crushing stage 14 and a grinding stage 16. Process water 18 is added to the grinding stage 16 at about 90°C.

The run of mine laterite ore 12 comprises largely smectite (nontronite) clay mineralogy, and may be defined as a clay-type ore without a significant barren siliceous component.

The beneficiation plant further effects, in a screening circuit 20, a two-stage screening of the product of the grinding stage 16. The screens utilised are a 5 mm primary screen and a secondary 1.75 mm screen. The components rejected through this screening process are referred to as mill "scats". Generally, the mineralogy of the scats is similar to that of the screen undersize component. However, the scats are harder than the finer undersize materials and contain relatively higher levels of magnesium and slightly lower levels of nickel (less than about 1.1 %) and cobalt (less than about 0.1 %). The scats do comprise a significant quantity of the clay component of the laterite ore. The scats consequently may be said-to constitute a coarse ore fraction (comprising about 4.4% Mg and about 22% Si). Similarly, the screen undersize may be said to constitute a fine ore fraction.

The coarse ore fraction constitutes about 6 to 12% of the run of mine ore. In Figure 1 a coarse ore fraction, the screen oversize material, is passed from the screening circuit 20 to an agglomeration step 22.

The agglomeration step 22 comprises adjusting the moisture content of the coarse ore fraction to between about 20% and 30%. The agglomeration step 22 may further comprise applying concentrated sulphuric acid during agglomeration in the range of about 10 kg to 300 kg acid per tonne of coarse ore, for example about 150 kg/tonne, followed by curing for a period of between about 1 to 20 days prior to irrigation.

The screen undersize material from the grinding step 16 is passed to a pressure acid leaching step 26. A sulphuric acid lixiviant is used to extract nickel and cobalt values from the fine ore fraction into solution at elevated temperature and pressure, producing a leach slurry comprising liquor and residue solids components. The leach slurry contains about 75 g/l acid and may be as high as about 85 g/l. Increasing the free acid concentration in the pressure leaching step 26 improves the nickel and cobalt extraction, whilst increasing the free acid concentration in the resulting leach liquor enhances the subsequent heap leaching.

The leach slurry is passed to a liquid/solid separation step, for example a counter-current decantation ("CCD") step 28. The solids underflow from the CCD step 28 are passed to waste 30.

Between 0 and 100% of the separated or clarified liquor from the CCD step 28 is passed, via a tank 31 or similar, to a neutralisation step 32 and a nickel and cobalt recovery step 34. The nickel and cobalt recovery step 34 provides a mixed sulphide product 36. Barren liquor 38, substantially free of nickel and cobalt, from the recovery step 34 is returned to the CCD step 28.

The agglomerated coarse ore fraction 20 from the agglomeration step 22 is stacked into a first heap 40 and a process solution is applied to the top of the heap 40, referred to as irrigation, and allowed to percolate downward through the heap 40, in order to leach the nickel and cobalt present in the clay mineral component. The process solution, with which the first heap 40 is irrigated, consists of a CCD overflow solution 42 from the tank 31, and contains dilute sulphuric acid in the range of about 10 to 50 g/l, for example between 20 to 50 g/I. The process solution is also at elevated temperature, for example in the range of about 30°C to 60°C.

An intermediate leach solution 44 is collected from a base of the heap 40 in a first pond 46 and then is applied to a second heap 48. The second heap 48 is again formed of the agglomerated coarse ore fraction from the agglomeration step 22. The objective of operating multiple heaps is to neutralise the incoming free acid down to the range of about 0 to 20 g/l, preferably 0 to 10 g/l. This has the primary benefit of significantly reducing the neutralisation costs in the following neutralisation step 32.

The heap leach pregnant leach solution typically contains between about 3 g/l and 5 g/I nickel in solution and also between about 1 and 15 g/I iron, predominantly in the form of ferric ions.

A final pregnant leach solution 50 is collected from a base of the second heap 48 in pond 52. Nickel recoveries of between about 60 to 95% from the coarse ore fraction in the heaps are recorded, with the cobalt recoveries of between about 60 to 95%. The heap leach pregnant leach liquor 50 is returned to the existing process circuit by way of the tank 31, as shown in Figure 1. Subsequently, the ferric ion concentration is reduced to less than about 1 g/l using a suitable reductant, for example hydrogen sulphide, and the solution is neutralised with calcrete to between about 0 and 3 g/l free acid in the neutralisation step 32.

The neutralised solution from step 32 is then treated to recover the nickel and cobalt from solution as the mixed sulphide product 36 in the recovery step 34. To recover the nickel and cobalt, hydrogen sulphide gas is used with a partial pressure between about 150 kPa and 400 kPa, in contact with the process solution at between about 80°C to 120°C, with a residence time of between 15 minutes and 90 minutes. The mixed sulphide product contains between about 50 and 55% nickel and between about 3 and 5% cobalt.

The use of clarified CCD overflow liquor in leaching of the coarse ore fraction in the heaps is advantageous as it doesn't lead to loss of permeability of the heap and allows efficient percolation of leach solution through the heap.

The neutralisation of the CCD overflow liquor as it passes through the heaps presents a saving in subsequent neutralisation costs. For example, calcrete use is reduced, which is turn leads to reduced emissions of greenhouse gases. Further, any potential for the neutralisation step in the process to present a "bottleneck" is reduced in the same manner.

It is envisaged that CCD underflow densities will increase relative to equivalent prior art processes, due to less gypsum being present from subsequent neutralisation.

It is further envisaged that more than two heaps of the coarse ore fraction may be utilised in the present invention.

It is still further envisaged that a bleed of the barren liquor 38 from the recovery step 34 may be used to flush the or each heap once those heaps are exhausted as a significant leach solution inventory may remain therein.

The Applicants have also envisaged that alternative strategies for the management of iron in the process of the present invention may be utilised prior to metals recovery.

Modifications and variations such as would be apparent to the skilled addressee are considered to fall within the scope of the present invention.

## Claims

1. A hydrometallurgical process for the extraction of nickel and cobalt from laterite ores, the method **characterised by** the method steps of:
(i) Passing an amount of a fine laterite ore to a pressure acid leaching step in which a leach slurry is formed, the slurry comprising liquor and residue solids components;
(ii) Passing an amount of a coarse laterite ore to an agglomeration step;
(iii) Forming at least one heap of the agglomerated coarse ore of step (ii);
(iv) Passing the leach slurry from step (i) to a solid/liquid separation step, a proportion of the liquor from which is passed to further processing for metals recovery and a further portion of which is passed directly or indirectly to the or each heap of step (iii);
(v) Leaching the coarse ore in the or each heap with liquor separated in step (iv) wherein the leaching agent is the free acid remaining therein from the pressure acid leaching step (i); and
(vi) Pregnant leach solution from the or each heap is passed directly or indirectly to metals recovery.

2. A method according to claim 1, wherein the pressure acid leaching step (i) comprises the use of a sulphuric acid lixiviant to extract nickel and cobalt values.

3. A method according to claim 1 or 2, wherein at least two operationally distinct heaps are formed from the coarse ore fraction.

4. A method according to any one of claims 1 to 3, wherein the portion of separated liquor from step (iv) is passed to a first heap from which an intermediate leach solution is recovered and in turn passed to a second heap from which the recovered leach solution is passed to metals recovery.

5. A method according to any one of claims 1 to 4, wherein the passing of a portion of the separated liquor from step (iv) directly or indirectly to the or each heap provides both the recovery of nickel and cobalt values from the coarse ore and the neutralisation of free acid in the separated liquor.

6. A method according to any one of claims 1 to 5, wherein the solids from the solid/liquid separation step (iv) are passed to waste.

7. A method according to any one of claims 1 to 6, wherein the solid/liquid separation step (iv) is provided in the form of a counter-current decantation process step, at least a portion of the overflow from such step being passed to the or each heap directly or indirectly.

8. A method according to claim 7, wherein the counter-current decantation overflow contains dilute sulphuric acid in the range of 10 to 50 g/l.

9. A method according to any one of claims 1 to 8, wherein the leach solution recovered from the at least one heap contains sulphuric acid in the range of about 0 to 20 g/l.

10. A method according to any one of claims 1 to 9, wherein the agglomeration of the coarse ore prior to heap stacking comprises the generally homogenous wetting of that ore at a percentage of about 20% to 30% inclusive of any moisture already present.

11. A method according to any one of claims 1 to 10, wherein the agglomeration step occurs with sulphuric acid solution.

12. A method according to any one of claims 1 to 11, wherein the agglomerated ore is subjected to a curing step over a period of 1 to 20 days prior to irrigation of the or each heap.

13. A method according to any one of claims 1 to 12, wherein the fine ore is the undersize fraction of a 2 mm aperture screen.

14. A method according to any one of claims 1 to 13, wherein the fine ore is the undersize fraction of a 1 mm aperture screen.

15. A method according to any one of claims 13 or 14, wherein the coarse ore is the oversize reject from this screen.

16. A method according to any one of claims 1 to 15, wherein a run of mine laterite ore containing nickel and cobalt is first beneficiated to provide the substantially fine laterite ore and substantially coarse ore fraction.

## Patentansprüche

1. Ein hydrometallurgischer Prozess zur Extraktion von Nickel und Cobalt aus Lateriterzen, wobei das Verfahren durch die folgenden Verfahrensschritte **gekennzeichnet** ist:
(i) Leiten einer Menge eines Feinlateriterzes zu einem Säurelaugungsschritt unter Druck, in dem eine Laugenaufschlämmung gebildet wird, wobei die Aufschlämmung Flüssigkeits- und Restfeststoffkomponenten beinhaltet;
(ii) Leiten einer Menge eines Groblateriterzes zu einem Agglomerationsschritt;
(iii) Bilden von mindestens einem Haufen des agglomerierten Groberzes aus Schritt (ii);
(iv) Leiten der Laugenaufschlämmung aus Schritt (i) zu einem Fest-/Flüssigtrennungsschritt, wobei ein Teil der Flüssigkeit davon zur weiteren Verarbeitung zur Metallgewinnung geleitet wird und ein weiterer Anteil davon direkt oder indirekt zu dem oder jedem Haufen aus Schritt (iii) geleitet wird;
(v) Laugung des Groberzes in dem oder jedem Haufen mit in Schritt (iv) abgetrennter Flüssigkeit, wobei das Laugungsmittel die darin aus dem Säurelaugungsschritt unter Druck (i) verbleibende freie Säure ist; und
(vi) die Frischlauge von dem oder jedem Haufen direkt oder indirekt zur Metallgewinnung geleitet wird.

2. Verfahren gemäß Anspruch 1, wobei der Säurelaugungsschritt unter Druck (i) die Verwendung eines Schwefelsäureextraktionsmittels zum Extrahieren von Nickel- und Cobaltwertstoffen beinhaltet.

3. Verfahren gemäß Anspruch 1 oder 2, wobei aus der Groberzfraktion mindestens zwei betriebsmäßig verschiedene Haufen gebildet werden.

4. Verfahren gemäß einem der Ansprüche 1 bis 3, wobei der Anteil an abgetrennter Flüssigkeit aus Schritt (iv) zu einem ersten Haufen geleitet wird, aus dem eine Zwischenlaugenlösung gewonnen und wiederum zu einem zweiten Haufen geleitet wird, von dem die gewonnene Laugenlösung zur Metallgewinnung geleitet wird.

5. Verfahren gemäß einem der Ansprüche 1 bis 4, wobei das direkte oder indirekte Leiten eines Anteils der abgetrennten Flüssigkeit aus Schritt (iv) zu dem oder jedem Haufen sowohl die Gewinnung von Nickel- und Cobaltwertstoffen aus dem Groberz als auch die Neutralisation von freier Säure in der abgetrennten Flüssigkeit bereitstellt.

6. Verfahren gemäß einem der Ansprüche 1 bis 5, wobei die Feststoffe aus dem Fest-/Flüssigtrennungsschritt (iv) zu Abfall geleitet werden.

7. Verfahren gemäß einem der Ansprüche 1 bis 6, wobei der Fest-/Flüssigtrennungsschritt (iv) in der Form eines Gegenstromdekantationsprozessschritts bereitgestellt ist, wobei mindestens ein Anteil des Überlaufs aus einem solchen Schritt direkt oder indirekt zu dem oder jedem Haufen geleitet wird.

8. Verfahren gemäß Anspruch 7, wobei der Gegenstromdekantationsüberlauf verdünnte Schwefelsäure im Bereich von 10 bis 50 g/l enthält.

9. Verfahren gemäß einem der Ansprüche 1 bis 8, wobei die aus dem mindestens einen Haufen gewonnene Laugenlösung Schwefelsäure im Bereich von etwa 0 bis 20 g/l enthält.

10. Verfahren gemäß einem der Ansprüche 1 bis 9, wobei die Agglomeration des Groberzes vor dem Haufenstapeln das im Allgemeinen homogene Benetzen dieses Erzes zu einem Prozentsatz von etwa 20 % bis 30 %, einschließlich jeglicher bereits vorhandener Feuchtigkeit, beinhaltet.

11. Verfahren gemäß einem der Ansprüche 1 bis 10, wobei der Agglomerationsschritt mit Schwefelsäurelösung geschieht.

12. Verfahren gemäß einem der Ansprüche 1 bis 11, wobei das agglomerierte Erz vor der Berieselung des oder jedes Haufens über einen Zeitraum von 1 bis 20 Tagen einem Aushärtungsschritt unterzogen wird.

13. Verfahren gemäß einem der Ansprüche 1 bis 12, wobei das Feinerz die Unterkornfraktion eines 2-mm-Apertursiebs ist.

14. Verfahren gemäß einem der Ansprüche 1 bis 13, wobei das Feinerz die Unterkornfraktion eines 1-mm-Apertursiebs ist.

15. Verfahren gemäß einem der Ansprüche 13 oder 14, wobei das Groberz der Überkornausschuss von diesem Sieb ist.

16. Verfahren gemäß einem der Ansprüche 1 bis 15, wobei zuerst ein Nickel und Cobalt enthaltendes Rohlateriterz angereichert wird, um die im Wesentlichen Feinlateriterz- und die im Wesentlichen Groberzfraktion bereitzustellen.

## Revendications

1. Un traitement hydrométallurgique destiné à l'extraction de nickel et de cobalt de minerais de latérite, le procédé étant **caractérisé par** les étapes de procédé de :
(i) faire passer une quantité de minerai de latérite fin à une étape de lixiviation à l'acide sous pression dans laquelle une boue de lixiviation est formée, la boue comprenant des composants de liqueur et de solides résiduels ;
(ii) faire passer une quantité d'un minerai de latérite grossier à une étape d'agglomération ;
(iii) former au moins un tas du minerai grossier aggloméré de l'étape (ii) ;
(iv) faire passer la boue de lixiviation provenant de l'étape (i) à une étape de séparation solide / liquide, une proportion de la liqueur de laquelle est passée à un traitement supplémentaire pour récupération des métaux et dont une autre portion est passée directement ou indirectement au ou à chaque tas de l'étape (iii) ;
(v) lixivier le minerai grossier dans le ou chaque tas avec de la liqueur séparée à l'étape (iv) où l'agent de lixiviation est l'acide libre demeurant dans celle-ci depuis l'étape de lixiviation à l'acide sous pression (i) ; et
(vi) la solution de lixiviation mère provenant du ou de chaque tas est passée directement ou indirectement à la récupération des métaux.

2. Un procédé selon la revendication 1, dans lequel l'étape de lixiviation à l'acide sous pression (i) comprend l'utilisation d'un lixiviant d'acide sulfurique pour extraire des minéraux de nickel et cobalt de valeur.

3. Un procédé selon la revendication 1 ou la revendication 2, dans lequel il est formé au moins deux tas opérationnellement distincts à partir de la fraction de minerai grossier.

4. Un procédé selon l'une quelconque des revendications 1 à 3, dans lequel la portion de liqueur séparée provenant de l'étape (iv) est passée à un premier tas à partir duquel une solution de lixiviation intermédiaire est récupérée et passée à son tour à un deuxième tas à partir duquel la solution de lixiviation récupérée est passée à la récupération des métaux.

5. Un procédé selon l'une quelconque des revendications 1 à 4, dans lequel le fait de passer une portion de la liqueur séparée provenant de l'étape (iv) directement ou indirectement au ou à chaque tas fournit à la fois la récupération de minéraux de nickel et cobalt de valeur à partir du minerai grossier et la neutralisation d'acide libre dans la liqueur séparée.

6. Un procédé selon l'une quelconque des revendications 1 à 5, dans lequel les solides provenant de l'étape de séparation solide / liquide (iv) sont passés au rebut.

7. Un procédé selon l'une quelconque des revendications 1 à 6, dans lequel l'étape de séparation solide / liquide (iv) est fournie sous la forme d'une étape de traitement par décantation à contre-courant, une portion au moins de la surverse de cette étape étant passée au ou à chaque tas directement ou indirectement.

8. Un procédé selon la revendication 7, dans lequel la surverse de décantation à contre-courant contient de l'acide sulfurique dilué dans la gamme allant de 10 à 50 g/l.

9. Un procédé selon l'une quelconque des revendications 1 à 8, dans lequel la solution de lixiviation récupérée de l'au moins un tas contient de l'acide sulfurique dans la gamme allant d'environ 0 à 20 g/l.

10. Un procédé selon l'une quelconque des revendications 1 à 9, dans lequel l'agglomération du minerai grossier préalablement à l'empilement en tas comprend le mouillage généralement homogène de ce minerai à un pourcentage allant d'environ 20 % à 30 %, humidité déjà présente comprise.

11. Un procédé selon l'une quelconque des revendications 1 à 10, dans lequel l'étape d'agglomération se produit avec de la solution d'acide sulfurique.

12. Un procédé selon l'une quelconque des revendications 1 à 11, dans lequel le minerai aggloméré est soumis à une étape de durcissement sur une période allant de 1 à 20 jours préalablement à l'irrigation du ou de chaque tas.

13. Un procédé selon l'une quelconque des revendications 1 à 12, dans lequel le minerai fin est la fraction des déclassés inférieurs d'un crible à ouvertures de 2 mm.

14. Un procédé selon l'une quelconque des revendications 1 à 13, dans lequel le minerai fin est la fraction des déclassés inférieurs d'un crible à ouvertures de 1 mm.

15. Un procédé selon l'une quelconque des revendications 13 ou 14, dans lequel le minerai grossier est le refus des déclassés supérieurs de ce crible.

16. Un procédé selon l'une quelconque des revendications 1 à 15, dans lequel un minerai de latérite tout-venant contenant du nickel et du cobalt est d'abord enrichi afin de fournir la fraction de minerai de latérite substantiellement fin et de minerai substantiellement grossier.
